# EUROPEAN PATENT APPLICATION

(11) **EP 4 760 401 A1**
(43) Date of publication of application: **17.06.2026**
(21) Application number: 25221674.2
(22) Date of filing: 09.12.2025
(51) Int. Cl.: G03G 15/00, B41J 11/00

(54) **IMAGE FORMING APPARATUS**

(30) Priority: 11.12.2024 JP 2024216298
(71) Applicant: KYOCERA Document Solutions Inc., Osaka-shi, Osaka 540-8585 (JP)
(72) Inventor: MORITA, Takahito, Osaka-shi, Osaka 540-8585 (JP); TAKAI, Hiroaki, Osaka-shi, Osaka 540-8585 (JP)
(74) Representative: Viering, Jentschura & Partner mbB Patent- und Rechtsanwälte

(57) **Abstract**

An image forming apparatus (1) according to an embodiment of the present technology includes a transportation guide (6) and a detector (7). The transportation guide (6) is provided along a curved portion of a transportation path (14) for a sheet (2). The transportation guide (6) has a curved shape and includes openings (19). The detector (7) is provided on an opposite side of the transportation guide (6) from the curved portion, and detects an end (27) of the sheet (2) in a scanning direction. In the image forming apparatus (1), the detector (7) detects an end (27) of a sheet (2) in the scanning direction using the curve-shaped transportation guide (6) including openings (19). This makes it possible to detect the sheet (2) efficiently.

## Description

### Field

The present technology relates to an image forming apparatus that is applicable to, for example, a printer.

### Background

Japanese Patent Application Laid-open No. 2022-93849 discloses a recording apparatus that includes an optical sensor that detects a sheet using a light-transmissive member that is arranged in parallel with an orthogonal direction and through which light is transmitted. In the recording apparatus, extraneous material attached to the light-transmissive member easily falls downwardly due to gravity. This makes it possible to prevent the detection accuracy from being reduced due to extraneous material being attached to a surface of the light-transmissive member.

### Summary

In order to achieve the object described above, an image forming apparatus according to an embodiment of the present technology includes a transportation guide and a detector.

The transportation guide is provided along a curved portion of a transportation path for a sheet. The transportation guide has a curved shape and includes openings.

The detector is provided on an opposite side of the transportation guide from the curved portion, and detects an end of the sheet in a scanning direction.

### Brief Description of Figures

Fig. 1 schematically illustrates an example of a configuration of an image forming apparatus according to an embodiment of the present technology;
Fig. 2 is a perspective view illustrating an example of a configuration of a transportation guide;
Fig. 3 schematically illustrates an example of a configuration of a sensor; and
Fig. 4 schematically illustrates detection operation performed by the sensor.

### Detailed Description

Hereinafter, an embodiment of the present disclosure will be described with reference to the drawings.

### Image Forming Apparatus

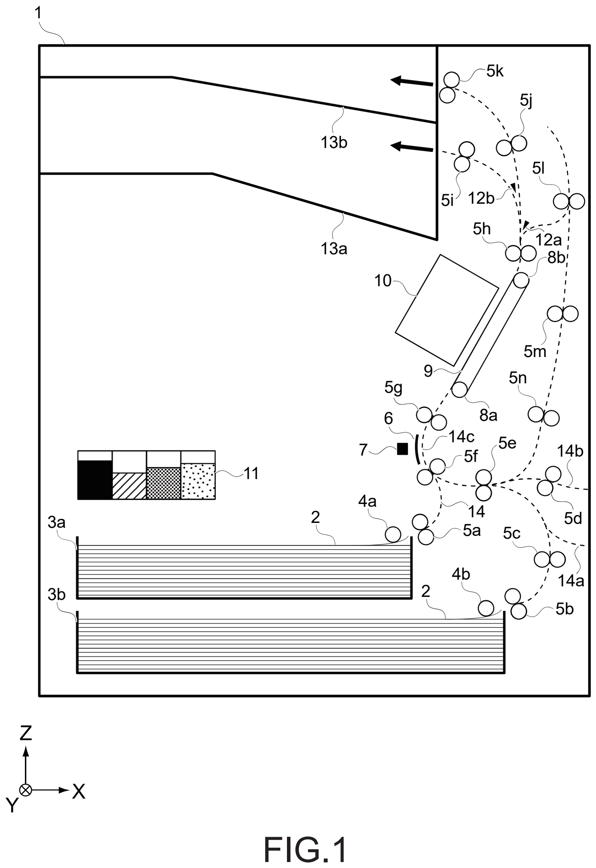

Fig. 1 schematically illustrates an example of a configuration of an image forming apparatus 1 according to an embodiment of the present technology.

Fig. 1 illustrates an interior of the image forming apparatus 1. The image forming apparatus 1 is a printer that forms a color image on paper 2 by ink jetting. The image forming apparatus 1 may be, for example, another type of printer, a fax machine, a copying machine, or a multifunctional device.

Here, an XYZ coordinate system is defined for the figures for convenience. It is assumed that, in the coordinate system, a positive side of a Y axis is a depth side in the figure, as viewed from a direction in which a positive side of a Z axis is an upper side in the figure and a positive side of an X axis is a right side in the figure (that is, the coordinate system is a right-handed coordinate system). In the present embodiment, the image forming apparatus 1 is arranged, as illustrated in Fig. 1, with an Z direction being an orthogonal direction (a gravity direction) and each of X and Y directions being a horizontal direction. Note that, when the present technology is applied, an orientation of the image forming apparatus 1 in use is not limited.

The image forming apparatus 1 includes sheet cassettes 3 (3a, 3b), pick rollers 4 (4a, 4b), roller pairs 5 (5a to 5n), a transportation guide 6, a sensor 7, pulleys 8 (8a, 8b), a transportation belt 9, a line head 10, an ink container 11, flaps 12 (12a, 12b), and discharge trays 13 (13a, 13b).

The sheet cassette 3 is a cassette that accommodates therein the paper 2. The paper 2 is a flat sheet cut to have a rectangular shape. In the present embodiment, a plurality of the pieces of paper 2 is placed inside of the sheet cassette 3 in parallel with the horizontal direction.

A specific shape of the paper 2 is not limited, and the shape may be changed properly to the extent that the present technology is feasible. Further, instead of the paper 2, any kind of sheet including a surface on which an image can be formed. For example, a medium such as a film or cloth may be used as the sheet.

The paper 2 corresponds to an embodiment of a sheet according to the present technology.

In the present embodiment, the two sheet cassettes 3a and 3b are provided, and the pieces of paper 2 having different sizes are respectively accommodated in the sheet cassettes 3a and 3b. Of course only one sheet cassette 3, or three or more sheet cassettes 3 may be provided. Further, different types of sheets may be respectively accommodated in a plurality of sheet cassettes 3.

The pick roller 4a is rotated by a drive source such as a motor to feed a piece of uppermost paper 2 in the sheet cassette 3a to the transportation path 14. Fig. 1 illustrates the transportation path 14 using a dashed line. Note that the transportation path 14 illustrated in Fig. 1 is merely an example, and a specific route of the transportation path 14 is not limited.

The roller pair 5 includes two rollers, and one of or both of the two rollers is rotated by a drive source so that the paper 2 is sandwiched between the two rollers to be fed. A space between the roller pairs 5 corresponds to a portion of the transportation path 14 through which the paper 2 passes. Thus, it can also be said that the roller pairs 5 are arranged along the transportation path 14. Note that a specific number of the roller pairs 5 and a specific position of the roller pair 5 are not limited.

A side of the transportation path 14 that the paper 2 passes on first is hereinafter referred to as an upstream side, and a side of the transportation path 14 that the paper 2 passes on afterward is hereinafter referred to as a downstream side. As illustrated in the figure, the paper 2 fed by the pick roller 4a passes through the roller pair 5a first, and is transported along the transportation path 14 to pass through the roller pair 5f situated on the downstream side. Note that a transportation guide used to cause the paper 2 to proceed along the transportation path 14 is properly provided between the roller pairs 5a and 5f, although an illustration thereof is omitted. The same applies to a space between the other roller pairs 5.

The pick roller 4b is rotated by the drive source to feed a piece of uppermost paper 2 in the sheet cassette 3b to the transportation path 14. The paper 2 passes through the roller pairs 5b, 5c, 5e, and 5f in this order.

Further, in the present embodiment, the paper 2 fed from an extension unit (not illustrated) is transported along a transportation path 14a to join in a portion of the transportation path 14 that is situated between the roller pairs 5c and 5e. Further, the paper 2 fed from a manual feeding tray is transported along a transportation path 14b, and passes through the roller pair 5d to arrive at the roller pair 5e. The extension unit, the manual feeding tray, the transportation paths 14a and 14b described above, and the roller pair 5d described above do not necessarily have to be provided.

A transportation path 14c situated between the roller pairs 5f and 5g is a curved portion. The transportation guide 6 has a curved shape substantially similar to a curved shape of the transportation path 14c, and is provided along the transportation path 14c. In the present embodiment, the transportation guide 6 is provided to the left of the transportation path 14c (on a negative side in the X direction).

The sensor 7 is provided to the left of the transportation guide 6. In other words, the sensor 7 is provided c. When the paper 2 passes through the transportation path 14c, the sensor 7 detects an end of the paper 2. Configurations and operations of the transportation guide 6 and the sensor 7 are described in detail later.

The sensor 7 corresponds to an embodiment of a detector according to the present technology.

The roller pair 5f corresponds to a first roller pair that is provided upstream of the sensor 7 in the transportation path 14.

The roller pair 5g corresponds to a second roller pair that is provided downstream of the sensor 7 in the transportation path 14.

The pulleys 8, the transportation belt 9, and the line head 10 are provided between the roller pairs 5g and 5h. The transportation belt 9 is an endless belt, and is held by being put along the pulleys 8a and 8b. The transportation belt 9 is also rotated by one of or both of the pulleys 8a and 8b being rotated by a drive source. A surface (an upper-left face) of the transportation belt 9 corresponds to a portion of the transportation path 14, and the paper 2 is also moved from the upstream side to the downstream side due to rotation of the transportation belt 9. Note that, in order to fix the paper 2 to the surface of the transportation belt 9, a hole is provided to the surface of the transportation belt 9, and the paper 2 sticks to the transportation belt 9 due to a negative pressure applied through the hole.

The line head 10 is provided to face the surface of the transportation belt 9, and ejects an ink of black, cyan, magenta, or yellow onto the paper 2 at a specified timing. This results in forming a color image on the paper 2. The ink ejected from the line head 10 is supplied from the ink container 11 through, for example, a tube (not illustrated).

After the paper 2 passes through the roller pair 5h, the flap 12a causes the paper 2 to be transported to the left when double-sided printing is not performed. Next, the flap 12b causes the paper 2 to be transported in a direction of one of the roller pairs 5i and 5j. The paper 2 transported to the roller pair 5i is discharged into the discharge tray 13a. The paper 2 transported to the roller pair 5j passes through the roller pair 5k to be discharged into the discharge tray 13b. In this example, two discharge trays 13 are provided. This makes it possible to, for example, separate discharge destinations of printed matter for respective persons in charge of performing printing. On the other hand, only a single discharge tray 13 may be provided.

After the paper 2 passes through the roller pair 5h, the flap 12a causes the paper 2 to be transported in a direction of the roller pair 5l when double-sided printing is performed. Thereafter, the paper 2 is switched back to pass through the roller pairs 5m and 5n, and arrives at the roller pair 5e. Thereafter, the line head 10 forms an image on an unprinted side of the paper 2 in a similar manner, and the paper 2 is discharged into the discharge tray 13a or 13b.

Moreover, a specific configuration of the image forming apparatus 1 is not limited. For example, a drying mechanism that dries an ink deposited on the paper 2, or an inspection apparatus that inspects a formed image may be provided.

### Transportation Guide and Sensor

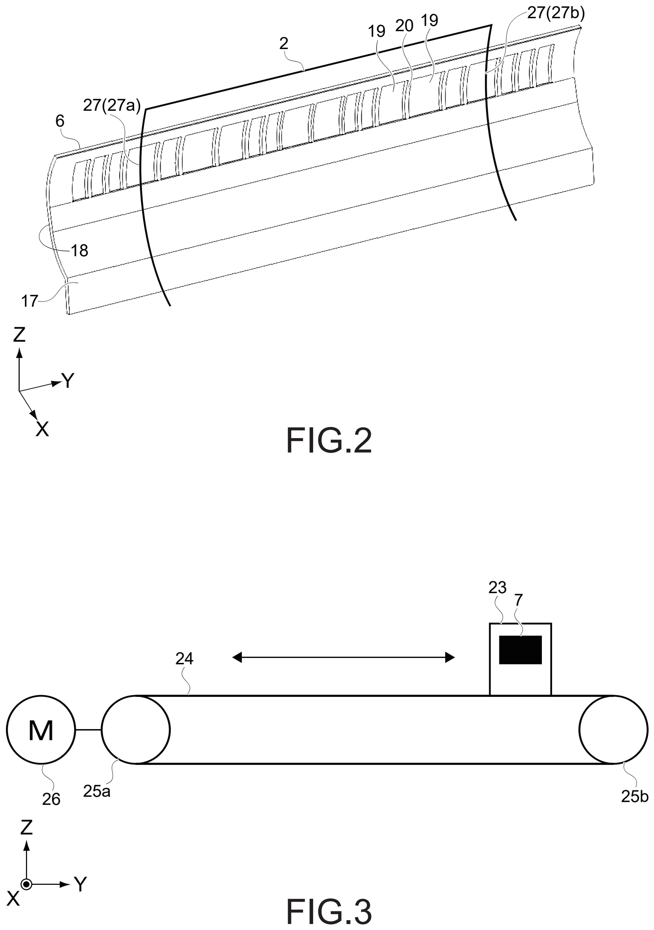

Fig. 2 is a perspective view illustrating an example of the configuration of the transportation guide 6.

Fig. 2 illustrates the transportation guide 6 and the paper 2 in process of passing through the transportation path 14c. Note that the paper 2 made transparent is illustrated in order to easily confirm a shape of the transportation guide 6 visually. Further, the sensor 7 is not illustrated.

The transportation guide 6 has a substantially rectangular shape, as viewed from the X direction, whereas the transportation guide 6 is slightly curved toward the negative side in the X direction, as viewed from the Y direction. A surface of the transportation guide 6 on a positive side in the X direction is hereinafter referred to as a front surface 17, and a surface of the transportation guide 6 on the negative side in the X direction is hereinafter referred to as a back surface 18. The paper 2 is transported in a state of being in contact with the front surface 17.

The transportation guide 6 includes a plurality of openings 19. The openings 19 each have a substantially rectangular shape, and are provided to an upper portion of the transportation guide 6 to be aligned in the Y direction. Further, a rib 20 is provided between two openings 19. In Fig. 2, only two openings 19 and one rib 20 are representatively denoted by reference numerals. A shape of the opening 19, the number of openings 19, arrangement of the openings 19, and the like are not limited, and may be changed properly to the extent that the present technology is feasible.

In the present embodiment, the ribs 20 have the same width in the Y direction. Note that "same" refers to not only "exactly the same" and also includes the case in which there is a slight difference.

Fig. 3 schematically illustrates an example of the configuration of the sensor 7.

Fig. 3 schematically illustrates a carriage 23, a timing belt 24, pulleys 25 (25a, 25b), and a motor 26 in addition to the sensor 7. Fig. 3 illustrates these components, as viewed from the positive side in the X direction. In other words, the transportation guide 6 and the paper 2 are situated in front on the surface of the sheet of Fig. 3.

The sensor 7 is arranged in a surface of the carriage 23 on the positive side in the X direction, and the carriage 23 is connected to an upper surface of the timing belt 24. When the pulleys 25a and 25b are rotated by the motor 26 being driven, the upper surface of the timing belt 24 is moved from side to side (toward a positive side and a negative side in the Y direction). As a result, the carriage 23 and the sensor 7 are also moved from side to side.

Here, the sensor 7 is situated at the same position in an up-and-down direction as the opening 19 and rib 20 included in the transportation guide 6. In other words, at all times, one of the openings 19 or one of the ribs 20 is situated in front of the sensor 7 on the surface of the sheet of Fig. 3, regardless of the position of the sensor 7 in a right-and-left direction.

The sensor 7 can detect an object situated in front (on the positive side in the X direction). For example, an optical sensor is used as the sensor 7. In this case, a reflective member is separately provided in front of the paper 2. Light emitted by the sensor 7 is not reflected off the reflective member but blocked when an object is situated in front, and is reflected off the reflective member when no object is situated in front. The sensor 7 can determine, by detecting a state of the reflected light, whether an object is situated in front. Moreover, a specific configuration of the sensor 7 is not limited.

When the sensor 7 is moved in the right-and-left direction while performing detection operation, this results in determining whether an object is situated in front at each position in the right-and-left direction. In other words, a scanning direction of scanning performed by the sensor 7 is the Y direction. Further, in the present embodiment, a transportation direction of the paper 2 at the position of the opening 19 is the Z direction. Thus, the transportation direction and the scanning direction are orthogonal to each other. Without being limited thereto, the scanning direction may be any direction if the present technology is feasible.

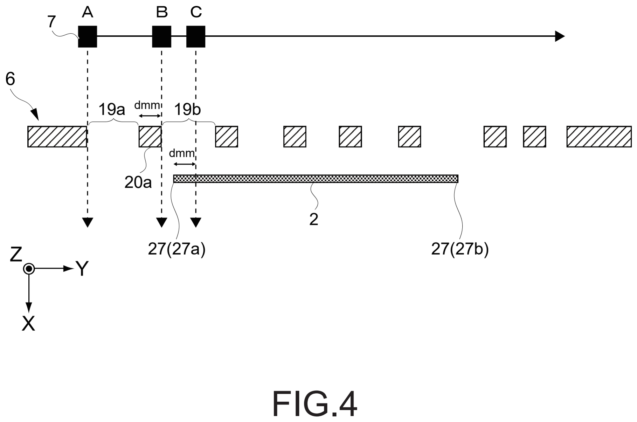

Fig. 4 schematically illustrates the detection operation performed by the sensor 7.

The sensor 7 performs scanning in the Y direction to detect ends 27 of the paper 2 in the Y direction. In other words, the sensor 7 detects a left end 27a that corresponds to a left side of the paper 2 in the Y direction, and a right end 27b that corresponds to a right side of the paper 2 in the Y direction. A specific detection method is described below.

Fig. 4 is a cross-sectional view of the paper 2, transportation guide 6, and sensor 7 cut along an X-Y plane at middle heights of the openings 19 and ribs 20 illustrated in Fig. 2. Note that, in order to facilitate understanding of the description, positions of the opening 19 and the rib 20, the numbers of openings 19 and ribs 20, and widths of the opening 19 and the rib 20 are different from those illustrated in Fig. 2. In this example, all of the ribs 20 have the same width d (mm).

The sensor 7 starts performing scanning to move to the right (a positive side in the Y direction) from a position A that is an initial position. The position A is situated at the same position in the Y direction as a left end of a leftmost opening 19a. Here, the case in which control such that "the sensor 7 immediately determines, upon detecting an object, that the object is the left end 27a of the paper 2" is performed, is discussed. In this case, an object is detected when the sensor 7 arrives at a left end of a leftmost rib 20a. Thus, the sensor 7 determines that the object is the left end 27a of the paper 2. However, actually, the object is the left end of the rib 20a.

In the present embodiment, control such that the sensor 7 determines, upon detecting an object of a length greater than a width d (mm) of the rib 20, that a left end of the object is the left end 27a of the paper 2 is performed in order to prevent such erroneous detection. In other words, the sensor 7 is set to ignore detection of a length of d (mm).

In this example, an object (actually the rib 20a) having a width of exactly d (mm) is detected when the sensor 7 arrives at a position B. However, the left end of the rib 20a is not determined to be the left end 27a of the paper 2 since the width does not exceed d (mm). Thereafter, the object remains undetected until the sensor 7 arrives at the left end 27a of the paper 2.

Then, detection of an object (actually the paper 2) is started again when the sensor 7 arrives at the left end 27a of the paper 2, and a left end of the object is determined to be the left end 27a of the paper 2 when the width of the object exceeds d (mm) (a position C). This determination is right since the object is actually the paper 2. More particularly, the sensor 7 calculates a position of the left end 27a of the paper 2 in the Y direction by the position C being offset by d (mm) in the Y direction.

Likewise, the sensor 7 performs scanning from the right to detect the right end 27b of the paper 2. Alternatively, when a size of the paper 2 is known in advance, a position of the right end 27b may be calculated on the basis of a position and a size of the left end 27a.

Note that, when the end 27 of the paper 2 overlaps the rib 20, the sensor 7 also detects, as part of d (mm), a portion of the rib 20 that does not overlap the paper 2. Thus, when the position of the end 27 of the paper 2 is calculated by the offset by d (mm) being performed, there may be a difference of up to d (mm) between the calculated position and an actual position of the end 27. Therefore, d (mm) is preferably set to a value acceptable as such a difference. As an example, it is preferable that, for example, d = 1.5 (mm).

In the image forming apparatus 1 according to the present embodiment, the end 27 of the paper 2 in the Y direction corresponding to the scanning direction is detected by the sensor 7 using the transportation guide 6 having a curved shape and including the openings 19, as described above. This makes it possible to detect the paper 2 efficiently.

When a width of actual paper is smaller than a paper width set by a user, an ink is ejected onto a portion of the transportation belt facing the line head, where the paper is not situated on the portion. Thus, the transportation belt may be contaminated. In order to prevent the contamination, a paper width is detected on an input side of the line head in the transportation path.

For example, detecting, by a reflective sensor, paper using a light-transmissive member is conceivable as the detection method. However, when extraneous material such as a scrap of paper is attached to the light-transmissive member, erroneous detection may be performed.

Further, a light-transmissive member is vertically arranged such that extraneous material attached to the light-transmissive member easily falls due to gravity. Such a method is also conceivable. However, attachment of extraneous material is still not prevented completely, and there is also a need to arrange a tray used to collect extraneous material that falls due to gravity. Further, the light-transmissive member itself costs a lot. Furthermore, when the light-transmissive member has a curved shape, sensor light emitted by the reflective sensor is refracted, and thus, reflected light is not detected by a light-receiving section of the sensor. Therefore, there is a need to form the light-transmissive member into a linear member. Thus, there are restrictions on a shape of the transportation path.

In the present technology, the configuration in which the transportation guide 6 is provided with the openings 19 used for detection performed by the sensor 7 is adopted to reduce costs and to ease restrictions on a design of a transportation path. Further, no extraneous material could be attached to a sensing path since sensing is performed through the opening 19. This makes it possible to detect the position of the end 27 of the paper 2 with a high degree of accuracy.

Further, in the present technology, the sensor 7 performs scanning in the Y direction corresponding to the scanning direction to detect the end 27 of the paper 2. This makes it possible to detect the end 27 of the paper 2 more accurately.

Furthermore, in the present technology, the openings 19 are aligned in the scanning direction. This makes it possible to detect the end 27 of the paper 2 more accurately.

Moreover, in the present technology, the ribs 20 each situated between corresponding openings 19 have the same width, and when the sensor 7 detects an object of a length greater than the width of the rib 20, an end of the object is determined to be the end 27 of the paper 2. This makes it possible to prevent erroneous detection such as detecting the rib 20 as the paper 2.

Further, in the present technology, the roller pairs 5f and 5g are provided in the transportation path 14, where the paper 2 is sandwiched between the rollers of the roller pairs 5f and between the rollers of the roller pairs 5g to be fed. The roller pair 5f is arranged upstream of the sensor 7, and the roller pair 5g is arranged downstream of the sensor 7. This makes it possible to detect the end 27 of the paper 2 more accurately.

Furthermore, in the present technology, the Y direction corresponding to the scanning direction is orthogonal to the Z direction corresponding to the transportation direction of the paper 2 in the transportation path 14c corresponding to a curved portion. This makes it possible to detect the end 27 of the paper 2 more accurately.

It should be understood by those skilled in the art that various modifications, combinations, subcombinations and alterations may occur depending on design requirements and other factors insofar as they are within the scope of the appended claims or the equivalents thereof.

## Claims

1. An image forming apparatus (1), comprising:
a curve-shaped transportation guide (6) that is provided along a curved portion of a transportation path (14) for a sheet (2), the transportation guide (6) including openings (19); and
a detector (7) that is provided on an opposite side of the transportation guide (6) from the curved portion, the detector (7) detecting an end (27) of the sheet (2) in a scanning direction.

2. The image forming apparatus (1) according to claim 1, wherein
the detector detects the end (27) of the sheet (2) by performing scanning in the scanning direction.

3. The image forming apparatus (1) according to claim 2, wherein
the openings (19) are a plurality of the openings (19) aligned in the scanning direction.

4. The image forming apparatus (1) according to claim 3, wherein
ribs (20) each situated between corresponding two of the plurality of the openings (19) have the same width in the scanning direction, and
when the detector (7) detects an object of a length greater than the width of the rib (20), the detector (7) determines that an end of the object is the end (27) of the sheet (2).

5. The image forming apparatus (1) according to any one of claims 1 to 4, further comprising
first and second roller pairs (5) each arranged in the transportation path (14), the sheet (2) being sandwiched between rollers of the first roller pair (5) and between rollers of the second roller pair (5) to be fed, wherein
the first roller pair (5) is provided upstream of the detector (7) in the transportation path (14), and
the second roller pair (5) is provided downstream of the detector (7) in the transportation path (14).

6. The image forming apparatus (1) according to any one of claims 1 to 4, wherein
the scanning direction is orthogonal to a transportation direction of the sheet (2) in the curved portion.
